**Europäisches Patentamt**

**European Patent Office**

**Office européen des brevets**

(11) Numéro de publication: **0 237 386**
**B1**

(12) **FASCICULE DE BREVET EUROPEEN**

(45) Date de publication du fascicule du brevet:
**26.07.89**

(21) Numéro de dépôt: **87400300.7**

(22) Date de dépôt: **11.02.87**

(51) Int. Cl.⁴: **F16K 37/00, F02C 7/232**

(54) Dispositif de transmission à deux degrés de liberté en entrée et un seul en sortie.

(30) Priorité: **19.02.86 FR 8602220**

(43) Date de publication de la demande:
**16.09.87 Bulletin 87/38**

(45) Mention de la délivrance du brevet:
**26.07.89 Bulletin 89/30**

(84) Etats contractants désignés:
**DE FR GB**

(56) Documents cités:
**EP-A- 0 051 961**
**FR-A- 2 227 474**
**US-A- 3 405 244**
**US-A- 3 688 495**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris(FR)**

(72) Inventeur: **Leclerc, Henry Roger, 12, rue Victor Hugo, F-91260 Juvisy sur Orge(FR)**

(74) Mandataire: **Moinat, François, S.N.E.C.M.A. Service des Brevets Boîte Postale 81, F-91003 Evry Cédex(FR)**

ACTORUM AG

**Description**

La présente invention a pour secteur technique celui des dispositifs permettant de transmettre en sortie un mouvement de translation seule tandis que l'entrée est soumise à un double mouvement de translation et de rotation. Plus particulièrement, l'invention concerne les dispositifs permettant de transmettre à un capteur une information sur le déplacement en translation d'un mobile sans que d'éventuelles rotations dudit mobile soient transmises au capteur de mesure du déplacement en translation.

Ce problème peut se rencontrer dans de nombreux cas mais l'invention vise plus précisément le cas où le mobile en entrée est un fourreau cylindrique déplacé par un fluide en non guidé en translation, ce qui peut lui faire subir des rotations éventuelles, tandis que le dispositif de sortie est constitué par deux tiges parallèles entre elles et mobiles en translation dans des supports fixes en rotation disposés à l'intérieur du fourreau et à ce titre, les tiges ne doivent pas supporter une quelconque rotation lors de leur mouvement de translation.

L'invention vise plus précisément encore le cas des pistons doseurs de carburant notamment dans des régulations de moteurs par exemple pour turbomachines. Dans ce domaine, les dispositifs de la génération précédente étaient totalement hydrauliques et le problème posé ici ne se rencontrait pas. Depuis lors, la tendance des constructeurs a été de réaliser des dispositifs électro-hydrauliques, la régulation en elle-même étant totalement électronique et un interface électro-hydraulique permettant soit la commande d'éléments hydrauliques, soit la transmission d'informations électriques provenant desdits éléments hydrauliques. Parmi ces informations peuvent figurer des pressions, des débits, des déplacements, etc... et l'invention sera ici décrite dans le cas d'un piston doseur de carburant, la variation de position linéaire du piston permettant de connaître à tout instant la quantité de carburant délivrée aux injecteurs du moteur.

La tendance actuelle pour la construction des régulateurs est de rendre la partie électronique de la régulation prédominante et va jusqu'à donner une pleine autorité aux calculateurs électroniques de régulation. Pour que la fiabilité de ceux-ci ne puisse être mise en défaut, les systèmes de calcul sont prévus pour travailler de façon redondante. De même, les prises de mesures sont effectuées de façon double de sorte que même si l'un des capteurs était inutilisable pour une raison quelconque, l'information serait tout de même transmise au calculateur par l'autre capteur.

Un tel dispositif double est représenté dans le brevet US-A 3 688 495 où le déplacement d'un pointeau est obtenu par un noyau de fer doux commandé par deux bobines à induction disposées dans le prolongement l'une de l'autre et actionnées soit alternativement soit simultanément de façon différentielle.

Ce type de dispositifs a l'inconvénient de nécessiter un encombrement axial important.

On connaît d'autres types de détecteurs doubles dans lesquels on dispose un détecteur d'un côté du tiroir dont le déplacement est mesuré et l'autre détecteur du côté opposé du tiroir, ce qui présente le même inconvénient d'encombrement.

Pour résoudre ce problème, on propose selon l'invention de disposer les deux capteurs de déplacement côte à côte et dans un bloc unique. Dans ce cas, les tiges de chacun des capteurs ne se trouvent alors plus situées sur l'axe longitudinal de déplacement du tiroir et, les bobines à inductions à l'intérieur desquelles elles doivent se déplacer sans frottement étant fixes, les tiges de capteurs doivent être insensibles à tout mouvement de rotation éventuel du tiroir auquel elles sont liées, ce qui entraînerait un désalignement des tiges par rapport aux bobines, donc des frottements et un mauvais fonctionnement des capteurs.

L'invention a donc pour but d'éviter cet inconvénient tout en proposant un dispositif de capteurs redondants simple, compact et bon marché.

L'invention a également pour but de permettre une telle disposition en évitant l'emploi supplémentaire d'un système d'anti-rotation du tiroir, qui ne pourrait être qu'encombrant et cher.

Selon l'invention, on y parvient en réalisant un dispositif pour transmettre simultanément à deux tiges parallèles entre elles un seul degré de liberté en translation longitudinale à partir d'un fourreau cylindrique les entourant et lui-même soumis à deux degrés de liberté en translation et en rotation, tel qu'il comprend une plaque circulaire de solidarisation de l'extrémité des deux tiges entre elles et en combinaison avec cette plaque, un moyen de liaison entre ladite plaque et le fourreau, apte à ne pas transmettre la rotation du fourreau à la plaque. Selon une particularité de l'invention, le moyen de liaison entre la plaque et le fourreau est constitué par un roulement à billes, ou une butée à billes dont la bague interne est disposée sur une portée circulaire de la plaque de solidarisation entre un épaulement et une plaque de maintien et dont la bague externe coopère avec une portée cylindrique interne du fourreau.

Un moyen élastique de rattrapage des jeux axiaux du moyen de liaison peut être disposé entre la plaque et le fourreau.

Lorsque l'invention est appliquée à un piston doseur de carburant d'un dispositif de régulation de carburant de turbomachine, le fourreau peut être constitué par le doseur lui-même.

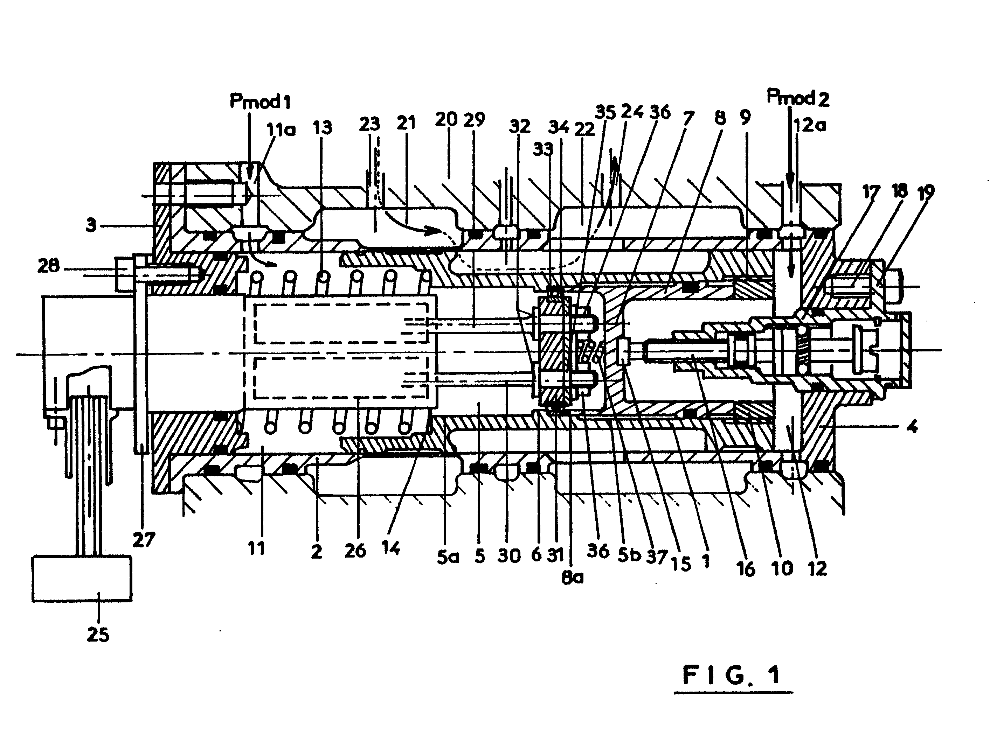

D'autres particularités de l'invention seront comprises à la lecture du complément de description suivant accompagné de la planche unique annexée qui représente, vu en coupe longitudinale, le dispositif de l'invention appliqué à un piston doseur de carburant d'une régulation de turbomachine.

Le doseur comprend notamment un fourreau 1 de forme généralement cylindrique, apte à se déplacer en rotation et en translation à l'intérieur d'un cylindre externe 2 fermé à ses deux extrémités opposées par deux flans 3 et 4. Le fourreau 1 est percé d'un alésage central 5 en deux parties 5a, 5b séparées par un épaulement interne 6. Le fourreau est solidaire d'un piston 7 dont une portée cylindrique 8 est ajustée à l'intérieur de l'alésage 5b dont l'extrémité est taraudée en 9 pour recevoir une bague filetée 10 de solidarisation du piston 7-8 avec le fourreau 1.

De part et d'autre du piston 7, sont formées deux chambres formées respectivement l'une 11 par le flan 3, une extrémité du fourreau 1 et une extrémité du cylindre 2, l'autre 12 par le flan 4, l'autre extrémité du fourreau 1 et l'autre extrémité du cylindre 2.

Les deux chambres 11 et 12 sont alimentées par des ajutages 11a et 12a du cylindre 2 en fluide respectivement à la pression Pmod1 et Pmod2 et le piston 7 solidaire du fourreau 1 se déplace sous l'action différentielle des fluides à pressions Pmod1 et Pmod2.

En outre ressort 13 disposé dans la chambre 11 entre le flanc 3 et un épaulement interne 14 de l'alésage 5a du fourreau 1, rappelle ce dernier vers une butée 15 réglable par une vis 16 se déplaçant dans un logement 17 taraudé traversant de façon étanche le flanc 4 auxquel il est fixé par des vis 18 traversant des pattes 19 dudit logement.

Le cylindre 2 est disposé à l'intérieur d'un carter 20 dans lequel sont usinées deux chambres annulaires 21, 22, la première 21 étant alimentée par un ajutage 23 du carter par une pompe volumétrique ou centrifuge tandis que la deuxième chambre 22 comporte une sortie 24 vers les injecteurs du moteur commandé par la régulation. Le passage d'une partie du fluide depuis la chambre d'alimentation 21 vers la chambre de sortie 22 s'effectue d'une façon connue qui ne sera pas détaillée ici, de telle sorte qui la variation de débit en sortie est proportionnelle au déplacement axial du piston 7 et donc du fourreau 1.

L'information relative au mouvement du fourreau 1 est transmise à un moyen de commande extérieur, par exemple un calculateur électronique, par deux capteurs linéaires à induction disposés électriquement en parallèle et saisissant simultanément l'information de déplacement, reliés électriquement à un connecteur principal 25 de la régulation.

Les deux capteurs sont disposés parallèlement l'un à l'autre dans une chemise 26 disposée à l'intérieur de la chambre 11, la chemise 26 traversant de façon étanche un alésage axial du flan 3 auquel elle est fixée par un flasque 27 vissé en 28 sur ledit flan.

Les tiges 29, 30 des deux capteurs sont situées dans un même plan, symétriquement par rapport à l'axe longitudinal du dispositif et coulissent à l'intérieur des bobines à induction de chaque capteur lesdites bobines (représentées en pointillés) étant contenues par la chemise 26.

Pour saisir simultanément l'information de déplacement du fourreau 1 sans être perturbées par des rotations dudit fourreau, les deux tiges 29,30 sont, selon l'invention, rendues solidaires entre elles par une plaque circulaire 31 en appui contre des épaulements 32 de chacune des tiges, la plaque comportant deux alésages symétriquement disposés par rapport à l'axe longitudinal du fourreau.

La plaque 31 comporte un épaulement 33 contre lequel s'appuie la bague intérieure d'un roulement à billes 34 maintenu en position par une plaque de maintien 35. La plaque 31 ainsi que la plaque 35 sont fixées contre les épaulements 32 par des écrous 36 vissés sur la extrémités filetées des tiges 29,30.

La bague externe du roulement 34 coopère avec la portée cylindrique interne du fourreau 1 entre l'épaulement 6 de celui-ci et l'extrémité 8a du piston 7.

Pour éviter des défauts de mesures dûs aux jeux inhérents à la fabrication des roulements, un moyen élastique de rattrapage des jeux axiaux est mis en place sous la forme d'un ressort 37, comprimé entre la plaque de solidarisation 31 et le piston 7.

Ainsi, lors d'un déplacement en translation de l'ensemble fourreau doseur 1 et du piston 7, qui n'est pas arrêté en rotation, une rotation éventuelle de cet ensemble n'entraîne en rotation que la bague externe du roulement 34 sans que ce degré de liberté soit transmis à la bague interne du roulement et donc sans affecter la position angulaire de la plaque de solidarisation et a fortiori les tiges 29,30 des capteurs, le seul degré de liberté transmis aux deux capteurs étant la translation du dispositif d'entrée, c'est à dire du fourreau doseur et du piston.

Comme on peut le voir, l'invention ne s'applique pas seulement à des capteurs linéaires redondants appliqués à un doseur de régulation, mais également à tout dispositif d'entraînement en translation où une rotation parasite en entrée doit ne pas être transmise aux organes de sortie commandés en translation.

Quand l'invention est appliquée aux régulateurs de turbomachines, ainsi que la description en a été faite, elle procure une économie en masse importante, ainsi qu'en encombrement puisque le capteur et son moyen de liaison sont logés à l'intérieur du fourreau du doseur, ce qui réduit les coûts de fabrication, tout en améliorant la fiabilité de la régulation.

## Revendications

1 - Dispositif pour transmettre simultanément à deux tiges (29, 30) parallèles entre elles un seul degré de liberté en translation longitudinale à partir d'un fourreau cylindrique (1) les entourant et lui-même soumis à deux degrés de liberté en translation et en rotation caractérisé en ce qu'il comprend une plaque circulaire (31) de solidarisation de l'extrémité des deux tiges (29, 30) entre elles, disposée perpendiculairement à l'axe de translation des tiges et en combinaison un moyen de liaison (34) entre la plaque (31) et le fourreau (1) apte à transmettre la translation et à ne pas transmettre la rotation du fourreau à la plaque.

2 - Dispositif selon la revendication 1, caractérisé en ce que le moyen de liaison entre la plaque et le fourreau est constitué par un roulement à billes (34) dont la bague interne est disposée sur une portée circulaire de la plaque de solidarisation (31) entre un épaulement (33) et une plaque de maintien (35) et dont la bague externe coopère avec une portée cylindrique interne du fourreau (1).

3 - Dispositif selon l'une quelconque des revendications 1 ou 2, caractérisé en ce qu'il comporte entre la plaque de solidarisation et le fourreau un moyen élastique (37) de rattrapage des jeux axiaux du moyen de liaison (34).

4 - Dispositif selon la revendication 3, caractérisé en ce que le moyen élastique est constitué par un ressort maintenu en compression entre la plaque (31) et un piston (7) solidaire du fourreau dans ses déplacements axiaux.

5 - Dispositif selon la revendication 4, caractérisé en ce que le mouvement de translation du fourreau (1) est commandé par des pressions hydrauliques Pmod1 et Pmod2 agissant sur les deux faces du piston 7, solidaire du fourreau (1).

6 - Dispositif selon l'une quelconque des revendications 1 à 5 caractérisé en ce que le fourreau (1) est constitué par le doseur (7) de carburant d'un dispositif de régulation de carburant de turbomachine, ce doseur étant mobile en translation et en rotation dans un cylindre externe (2) fixe.

7 - Dispositif selon la revendication 6, caractérisé en ce que les deux tiges (29,30) sont constituées par les tiges de deux capteurs de position pour la mesure redondante du déplacement en translation du doseur de carburant.

8 - Dispositif selon la revendication 7 caractérisé en ce que les deux capteurs sont disposés parallèlement entre eux dans une chemise unique (26) solidaire du cylindre externe (2), la chemise (26) étant elle-même disposée à l'intérieur du fourreau-doseur (1).

9 - Dispositif selon l'une quelconque des revendications 7 ou 8 caractérisé en ce que les capteurs de position sont des capteurs linéaires à induction dont les bobines à induction disposées dans la chemise (26) sont reliées électriquement au connecteur principal (25) du dispositif de régulation.

## Patentansprüche

1. Vorrichtung zur Übertragung eines einzigen Freiheitsgrads der longitudinalen Translation gleichzeitig auf zwei zueinander parallele Stangen (29, 30) von einer diese Stangen umgebenden zylindrischen Hülse (1), die ihrerseits zwei Freiheitsgrade der Bewegung, nämlich einen Freiheitsgrad der Translation und einen Freiheitsgrad der Rotation besitzt, gekennzeichnet durch eine senkrecht zur Translationsachse der Stangen angeordnete kreisförmige Platte (31) zur festen gegenseitigen Verbindung der Enden der beiden Stangen (29, 30) und in Kombination hiermit ein zwischen der Platte (31) und der Hülse (1) angeordnetes Verbindungsmittel (34) zur Übertragung der Translationsbewegung, nicht jedoch der Rotationsbewegung der Hülse auf die Platte.

2. Vorrichtung nach Anspruch 1, dadurch gekennzeichnet, daß das zwischen der Platte und der Hülse angeordnete Verbindungsmittel ein Kugellager (24) ist, dessen Innenring auf einer kreisförmigen Auflagefläche der Verbindungsplatte (31) zwischen einer Schulter (33) und einer Halteplatte (35) angeordnet ist, und dessen Außenring mit einer inneren zylindrischen Auflagefläche der Hülse (1) zusammenwirkt.

3. Vorrichtung nach einem der Ansprüche 1 oder 2, dadurch gekennzeichnet, daß zwischen der Verbindungsplatte und der Hülse ein elastisches Mittel (37) zur Befestigung des axialen Spiels der Verbindungsmittels (34) vorgesehen ist.

4. Vorrichtung nach Anspruch 3, dadurch gekennzeichnet, daß das elastische Mittel aus einer Feder besteht, die zwischen der Platte (31) und einem Kolben (7) komprimiert ist, der mit der Hülse bei deren axialen Bewegungen fest verbunden ist.

5. Vorrichtung nach Anspruch 4, dadurch gekennzeichnet, daß die Translationsbewegung der Hülse (1) durch hydraulische Drücke (Pmod1 und Pmod2) bewirkt wird, die auf die beiden Flächen des mit der Hülse (1) fest verbundenen Kolbens (7) einwirken.

6. Vorrichtung nach einem der Ansprüche 1 bis 5, dadurch gekennzeichnet, daß die Hülse (1) aus dem Kraftstoffdosierer (7) einer Einrichtung zur Kraftstoffregelung einer Turbomaschine besteht, der in einem festen Außenzylinder (2) Translations- und Rotationsbewegungen ausführen kann.

7. Vorrichtung nach Anspruch 6, dadurch gekennzeichnet, daß die beiden Stangen (29, 30) von den Stangen zweier Positionsaufnehmer zur redundanten Messung der Translationsbewegung des Kraftstoffdosierers gebildet sind.

8. Vorrichtung nach Anspruch 7, dadurch gekennzeichnet, daß die beiden Positionsaufnehmer in einem einzigen Mantel (26) parallel zueinander angeordnet sind, der mit dem Außenzylinder (2) fest verbunden ist und seinerseits im Innern der Dosierer-Hülse (1) angeordnet ist.

9. Vorrichtung nach einem der Ansprüche 7 oder 8, dadurch gekennzeichnet, daß die Positionsaufnehmer lineare Induktionsaufnehmer sind, deren in dem genannten Mantel (26) angeordnete Induktionsspulen elektrisch mit dem Hauptschalter (25) der Regelungseinrichtung verbunden sind.

## Claims

1. Device for transmitting a single degree of freedom in terms of longitudinal translational motion simultaneously to two rods (29, 30) parallel to one another from a cylindrical sleeve (1) which surrounds them and which is itself subjected to two degrees of freedom in terms of translational motion and of rotation, characterized in that it comprises a circular plate (31) for fixing the ends of the two rods (29, 30) to one another, which is arranged perpendicularly relative to the axis of translational motion of the rods, and, in combination, a means of connection (34) between the plate (31) and the sleeve (1), the said means being designed to transmit the translational motion and not to transmit the rotation of the sleeve to the plate.

2. Device according to Claim 1, characterized in that the means of connection between the plate and the sleeve consists of a ball bearing (34), the inner ring of which is arranged on a circular bearing surface of the fixing plate (31) between a shoulder (33) and a retaining plate (35) and the outer ring of which interacts with an inner cylindrical bearing surface of the sleeve (1).

3. Device according to either one of Claims 1 or 2, characterized in that, between the fixing plate and the sleeve, it possesses an elastic means (37) for compensating the axial plays of the connection means (34).

4. Device according to Claim 3, characterized in that the elastic means consists of a spring maintained under compression between the plate (31) and a piston (7) integral with the sleeve in terms of its axial movements.

5. Device according to Claim 4, characterized in that the translational motion of the sleeve (1) is controlled by hydraulic pressures Pmod1 and Pmod2 acting on the two faces of the piston 7 integral with the sleeve (1).

6. Device according to any one of Claims 1 to 5, characterized in that the sleeve (1) consists of the fuel-proportioning element (7) of a fuel-regulating device of a turbo-engine, this proportioning element being movable in terms of translational motion and of rotation in a stationary outer cylinder (2).

7. Device according to Claim 6, characterized in that the two rods (29, 30) consist of the rods of two position sensors for the redundant measurement of the translational motion of the fuel-proportioning element.

8. Device according to Claim 7, characterized in that the two sensors are arranged parallel to one another in a single casing (26) integral with the outer cylinder (2), the casing (26) itself being arranged inside the proportioning sleeve (1).

9. Device according to either one of Claims 7 or 8, characterized in that the position sensors are linear induction sensors, of which the induction coils arranged in the casing (26) are connected electrically to the main connector (25) of the regulating device.

**F I G. 1**

Pmod1

Pmod2

11a 13 23 21 20 29 32 34 22 35 24 36 7 8 9 12a

3 33 17 18 19

28

4

27

25

11 2 26 14 5a 5 30 6 31 36 5b 37 15 1 16 10 12

8a

EP 0 237 386 B1